# EUROPEAN PATENT SPECIFICATION

(11) **EP 3 678 441 B1**
(45) Date of publication and mention of the grant of the patent: **06.10.2021**
(21) Application number: 19219948.7
(22) Date of filing: 30.12.2019
(51) Int. Cl.: H04W 74/00, H04W 74/08, H04W 72/08

(54) **IMPROVING ACCESS PROCEDURE**
VERBESSERTES ZUGANGSVERFAHREN
AMÉLIORATION DE LA PROCÉDURE D'ACCÈS

(30) Priority: 07.01.2019 US 201962789087 P
(43) Date of publication of application: 08.07.2020
(73) Proprietor: Nokia Technologies Oy, 02610 Espoo (FI)
(72) Inventor: VEJLGAARD, Benny, 9260 Gistrup (DK); PEDERSEN, Klaus Ingemann, 9000 Aalborg (DK); KIILERICH PRATAS, Nuno Manuel, 9260 Gistrup (DK)
(74) Representative: Nokia EPO representatives

(56) References cited:
- US-A1- 2011 250 913
- US-A1- 2013 114 515
- QUALCOMM INCORPORATED: "Discussion on detection of UE interference condition at handover", 3GPP DRAFT; R2-152850, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 15 May 2012 (2012-05-15), XP050607471, [retrieved on 2012-05-15]

## Description

### TECHNICAL FIELD

Various example embodiments relate generally to improving an access procedure, such as a random-access procedure.

### BACKGROUND

When a user equipment (UE) is in an idle mode and needs to communicate with a network, the UE may undergo an access procedure, such as a random-access procedure, to enter an RRC connected mode. At the time of performing the access procedure there may be various other UEs in the vicinity communicating and causing interference to the access procedure. A document US 2013/0114515 A1 discloses an indication of IDC interference to a network during an access procedure.

### BRIEF DESCRIPTION

The invention is defined by the appended claims, and provides an apparatus for a user equipment according to claim 1, an apparatus for a network node according to claim 6, a method at a user equipment according to claim 11, a method at a network node according to claim 12 and a computer program product according to claim 13. Preferred embodiments are defined by the dependent claims.

### LIST OF THE DRAWINGS

In the following, the invention will be described in greater detail with reference to the embodiments and the accompanying drawings, in which
Figure 1 presents a communication network, according to an embodiment;
Figure 2 shows an example access procedure, according to an embodiment;
Figures 3 and 4 show methods, according to some embodiments;
Figures 5A and 5B illustrate some example tables, according to some embodiments;
Figure 6 depicts mapping of the interference information to time and frequency resources, according to an embodiment;
Figure 7A and 7B illustrate some embodiments for signaling the interference information to a network;
Figure 8 shows a signaling flow diagram, according to an embodiment; and
Figures 9 and 10 illustrate apparatus, according to some embodiments.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. The term "transmission" and/or "reception" may refer to wirelessly transmitting and/or receiving via a wireless propagation channel on radio resources.

Embodiments described may be implemented in a radio system, such as one comprising at least one of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE). Term 'eLTE' here denotes the LTE evolution that connects to a 5G core. LTE is also known as evolved UMTS terrestrial radio access (EUTRA) or as evolved UMTS terrestrial radio access network (EUTRAN).

The embodiments are not, however, restricted to the systems/RATs given as an example but a person skilled in the art may apply the solution to other communication systems provided with necessary properties. One example of a suitable communications system is the 5G system. The 3GPP solution to 5G is referred to as New Radio (NR). 5G has been envisaged to use multiple-input-multiple-output (MIMO) multi-antenna transmission techniques, more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and being integrable with existing legacy radio access technologies, such as the LTE.

The current architecture in LTE networks is distributed in the radio and centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications). Edge cloud may be brought into RAN by utilizing network function virtualization (NVF) and software defined networking (SDN). Using edge cloud may mean access node operations to be carried out, at least partly, in a server, host or node operationally coupled to a remote radio head or base station comprising radio parts. Network slicing allows multiple virtual networks to be created on top of a common shared physical infrastructure. The virtual networks are then customised to meet the specific needs of applications, services, devices, customers or operators.

For 5G networks, it is envisaged that the architecture may be based on a so-called CU-DU (central unit - distributed unit) split, where one gNB-CU controls several gNB-DUs. The term 'gNB' may correspond in 5G to the eNB in LTE. The gNBs (one or more) may communicate with one or more UEs 120. The gNB-CU (central node) may control a plurality of spatially separated gNB-DUs, acting at least as transmit/receive (Tx/Rx) nodes. In some embodiments, however, the gNB-DUs (also called DU) may comprise e.g. a radio link control (RLC), medium access control (MAC) layer and a physical (PHY) layer, whereas the gNB-CU (also called a CU) may comprise the layers above RLC layer, such as a packet data convergence protocol (PDCP) layer, a radio resource control (RRC) and an internet protocol (IP) layers. Other functional splits are possible too. It is considered that skilled person is familiar with the OSI model and the functionalities within each layer.

Some other technology advancements probably to be used are Software-Defined Networking (SDN), Big Data, and all-IP, to mention only a few non-limiting examples. For example, network slicing may be a form of virtual network architecture using the same principles behind software defined networking (SDN) and network functions virtualisation (NFV) in fixed networks. SDN and NFV may deliver greater network flexibility by allowing traditional network architectures to be partitioned into virtual elements that can be linked (also through software). Network slicing allows multiple virtual networks to be created on top of a common shared physical infrastructure. The virtual networks are then customised to meet the specific needs of applications, services, devices, customers or operators.

The plurality of gNBs (access points/nodes), each comprising the CU and one or more DUs, may be connected to each other via the Xn interface over which the gNBs may negotiate. The gNBs may also be connected over next generation (NG) interfaces to a 5G core network (5GC), which may be a 5G equivalent for the core net-work of LTE. Such 5G CU-DU split architecture may be implemented using cloud/server so that the CU having higher layers locates in the cloud and the DU is closer to or comprises actual radio and antenna unit. There are similar plans ongoing for LTE/LTE-A/eLTE as well. When both eLTE and 5G will use similar architecture in a same cloud hardware (HW), the next step may be to combine software (SW) so that one common SW controls both radio ac-cess networks/technologies (RAN/RAT). This may allow then new ways to control radio resources of both RANs. Furthermore, it may be possible to have con-figurations where the full protocol stack is controlled by the same HW and handled by the same radio unit as the CU.

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (loT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The embodiments may be also applicable to narrow-band (NB) Internet-of-things (IoT) systems which may enable a wide range of devices and services to be connected using cellular telecommunications bands. NB-IoT is a narrowband radio technology designed for the Internet of Things (IoT) and is one of technologies standardized by the 3rd Generation Partnership Project (3GPP). Other 3GPP loT technologies also suitable to implement the embodiments include machine type communication (MTC) and eMTC (enhanced Machine-Type Communication). NB-IoT focuses specifically on low cost, long battery life, and enabling a large number of connected devices. The NB-IoT technology is deployed "in-band" in spectrum allocated to Long Term Evolution (LTE) - using resource blocks within a normal LTE carrier, or in the unused resource blocks within a LTE carrier's guard-band - or "standalone" for deployments in dedicated spectrum.

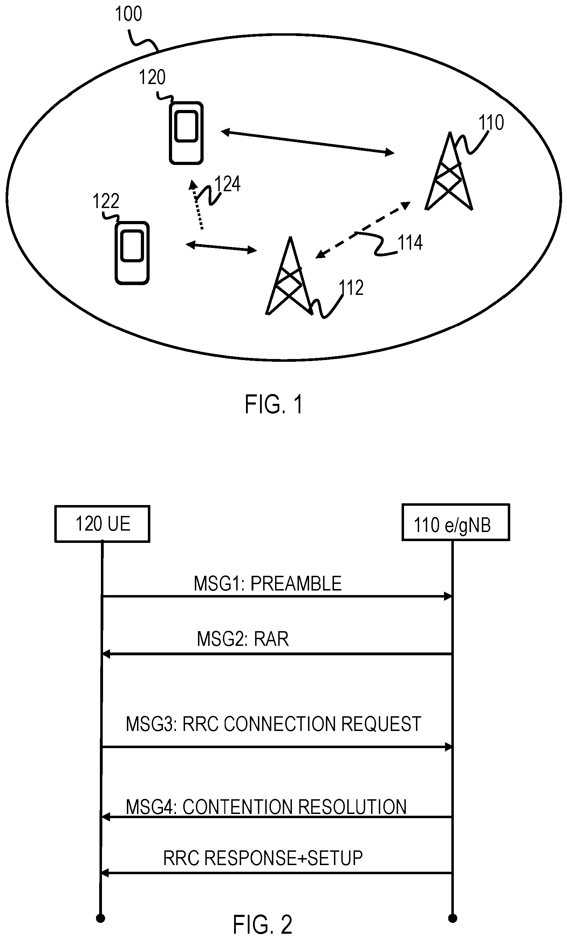

Figure 1 illustrates an example of a communication system to which embodiments of the invention may be applied. The system may comprise a control node 110 providing a cell 100. Each cell may be, e.g., a macro cell, a micro cell, femto, or a pico cell, for example. In another point of view, the cell may define a coverage area or a service area of the access node 110. The control node 110 may be an evolved Node B (eNB) as in the LTE and LTE-A, ng-eNB as in eLTE, gNB of 5G, or any other apparatus capable of controlling radio communication and managing radio resources within a cell. The control node 110 may be called a base station, network node, or an access node.

The system may be a cellular communication system composed of a radio access network of access nodes, each controlling a respective cell or cells. The access node 110 may provide user equipment (UE) 120, 122 (one or more UEs) with wireless access to other networks such as the Internet. The wireless access may comprise downlink (DL) communication from the control node 110 to the UE 120, 122 and uplink (UL) communication from the UE 120, 122 to the control node 110.

Additionally, one or more local area access nodes 112 may be arranged such that a cell 112 provided by the local area access node at least partially overlaps the cell 100 of the macro cell access node 110. The local area access node may provide wireless access within a sub-cell that may be comprised within a macro cell 100. Examples of the sub-cell may include a micro, pico and/or femto cell. Typically, the sub-cell provides a hot spot within a macro cell. The operation of the local area access node may be controlled by an access node under whose control area the sub-cell is provided. In general, the control node 112 may be likewise called a base station, network node, or an access node. The cell 102 need not be a micro, pico and/or femto cell, but may be a macro cell as well.

The UE typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, vehicular device, and multimedia device.

In the case of multiple access nodes in the communication network, the access nodes may be connected to each other with an interface 114. LTE specifications call such an interface as X2 interface. For IEEE 802.11 network (i.e. wireless local area network, WLAN, WiFi), a similar interface Xw may be provided between access points. An interface between an eLTE access point and a 5G access point may be called Xn. Other communication methods between the access nodes may also be possible. The access node 110 may be further connected via another interface to a core network of the cellular communication system. The LTE specifications specify the core network as an evolved packet core (EPC), and the core network may comprise a mobility management entity (MME) and a gateway node. The MME may handle mobility of terminal devices in a tracking area encompassing a plurality of cells and handle signalling connections between the terminal devices and the core net-work. The gateway node may handle data routing in the core network and to/from the terminal devices. The 5G specifications specify the core network as a 5G core (5GC), and the core network may comprise an advanced mobility management entity (AMF) and a gateway node. The AMF may handle mobility of terminal devices in a tracking area encompassing a plurality of cells and handle signalling connections between the terminal devices and the core network. The gateway node may handle data routing in the core network and to/from the terminal devices.

When UE (e.g. the UE 120) is power up, it is in disconnected mode/idle mode. In idle mode, the UE may perform functions such as PLMN selection, reception of system information broadcast, cell re-selection mobility. The UE may move to a radio resource control (RRC) connected mode (from the idle mode) with an access procedure, such as an initial access/attach procedure or a connection establishment/re-establishment procedure. In RRC connected mode, RAN connection (both control and user planes) is established for the UE, transfer of unicast data to/from the UE may take place and the network controls mobility.

If there is no activity from the UE for a short time, the UE may suspend its session by moving to an RRC inactive mode. The UE may resume its session by moving to RRC connected mode.

As said, when the UE 120 requires connection with the network while being in the idle or in the RRC inactive mode, the UE may initiate/participate in an initial access procedure, such as a random-access (RA) procedure. Figure 2 briefly shows a common RA process (also known as a (physical) RA channel ((P)RACH) procedure/process) between the UE 120 and the eNB/gNB 110. In a contention based random access (CBRA) process, showed in Figure 2, the UE 120 selects one of available PRACH preambles and transmits it in a message (Msg) 1 from the UE 120 to eNB/gNB 110. The UE also needs to derive identity to the network so that network can address it in next step. The identity which UE will use is called RA-RNTI (random access radio network temporary identity). In next step, the gNB 110 sends a random-access response (RAR) to UE 120 as Msg2 addressed to UE with the relevant RA-RNTI. Msg2 may by default carry the following information: Temporary C-RNTI, which is another identity given to the UE 120; timing advance (TA) value, which provides means for the UE to compensate for the roundtrip delay caused by UE's distance from the eNB/gNB; and an uplink grant resource, which is assigned as an initial resource to UE so that it can use uplink shared channel. Then, by using the uplink shared channel, the UE 120 sends Msg3 to the network. This Msg3 may be called "RRC connection request message". At this point the UE is identified by the temporary C-RNTI. Thereafter, the eNB/gNB may send Msg4 to the UE for contention resolution. All Msg1, Msg2, Msg3, Msg4 may be MAC level messages. After the RRC connection request of Msg3 is processed, a RRC response will be sent by gNB to the UE 120. In an embodiment, although not shown, the RRC message (e.g. the RRC Connection Setup message) may be multiplexed with the Msg4 (i.e. sent with the MAC contention resolution CE). With the contention-based RA process, there is some possibility that multiple UEs send PRACH with identical signatures. This may mean the same PRACH preamble from multiple UE reaches the network (e.g. gNB) at the same time. Due to such overlap/collision, the RACH process for one or more of the UEs simultaneously attempting the RACH process with the same preamble may fail. Due to this, the network may need to rely on the contention resolution of Msg4.

In an embodiment, the difference between (i) RRC Inactive to RRC Connected transition and (ii) RRC Idle to RRC Connected transition may be the content of the Msg3 (RRC connection establishment in case of (ii) and RRC connection reestablishment in case of (i)).

Time division duplex (TDD) refers to duplex communication where uplink is separated from downlink by the allocation of different time slots in the same frequency band. To effectively adjust communication needs in different cells in TDD mode, e.g. NR may be provided with flexibility for link direction switching on per cell basis. That is, each cell may be able to dynamically switch between uplink and downlink transmission directions. There may be time synchronicity between gNBs 110 and 112 such that radio frame and subframe boundaries are fully aligned. The gNBs 110 and 112 may have different link directions, adjusted either on a subframe, slot, or intra-slot resolution. The adjustment of link direction may be conducted on a radio frame configuration basis (e.g. 10 ms), or on a resolution that allows to dynamically select the next slot format. For NR, a slot is defined as having 14 symbols (assuming normal cyclic prefix, CP) or 12 symbols (extended CP). The slot length may therefore depend on a sub-carrier spacing (SCS), which may equal 1 ms for 15 kHz SCS, 0.5 ms for 30kHz SCS, 0.25ms for 60kHz SCS, etc. There are different slot formats, including downlink-only slot, uplink-only slot, and slot formats with mixtures of downlink and uplink symbols. E.g. NR supports at least semi-statically assigned DL/UL transmission direction as gNB operation, i.e., the assigned DL/UL transmission direction can be signaled to the UE by higher layer signaling.

This kind of flexibility for the link direction per slot basis offer enhanced capabilities to adapt according to the offered uplink and downlink traffic, but also comes with the potential cost of undesirable cross link interference (CLI). The CLI comes in the form of gNB-to-gNB interference (i.e. one gNB transmitting while the other one receiving) and UE-to-UE (i.e. one UE transmitting while the other one receiving on the same resources).

The table below summarize the types of experienced UE interference (for the case of Figure 1) depending on whether two considered UEs 120, 122 transmit (Tx) or receive (Rx).

| **UE 120** | **UE 122** | **Comment** |
|---|---|---|
| Rx | Tx | CLI scenario |
| Tx | Tx | Co-channel interference |
| Tx | Rx | CLI scenario |
| Rx | Rx | No impact |

The CLI (when present) is in principle affecting the system performance in each of RRC IDLE, INACTIVE, and CONNECTED modes. In the transition from RRC IDLE (and RRC INACTIVE) to RRC CONNECTED mode CLI may result in a failure to establish call setups. E.g. when UE 120 initiates a call establishment, the UE may trigger the random-access procedure. However, this procedure (e.g. messages 2 and 4 of Figure 2) may suffer from interference, such as UE-to-UE CLI interference or some other interference, that may jeopardize this procedure. Figure 1 depicts a scenario with UE-to-UE CLI such that UE 120 attempting the access procedure with gNB 110 may be interfered (arrow 124) by the communication taking place between the UE 122 and gNB 112. Although not shown, the gNB 110 may also communicate with the UE 122, which communication may cause interference to the UE 120. It may be desirable to minimize the impact of any interference, such as UE-to-UE CLI, co-channel interference, intra-cell interference, and inter-cell interference, to ensure successful UE decoding of messages 2 (random access response) and message 4 (contention resolution).

Let us assume the UE 120 in Figure 1 is trying to establish connection to gNB 110. However, the access procedure is being interfered by the uplink connection between UE 122 and gNB 112. During the initial access procedure - to enter to the RRC connected mode from either RRC idle or RRC inactive state - the gNB 110 and UE 120 does not have any measure on the interference, such as CLI, from other UEs 122 near the connecting UE 120. The interference measurements and scheduling is only available once the UE 120 is in the RRC connected state and has exchanged the interference measurements with the serving gNB 110. Therefore, the interference from nearby UEs 122 may cause degradation in the access performance (low access success), if not considered when scheduling the downlink exchanges during the initial access procedure.

Therefore, one problem addressed is the reduction of the effect of interference, such as CLI, upon the reception of Message 2 and 4 (as depicted in Figure 2) at the UE 120. This problem and required solution is different from a situation where the interference is taken into account while the UE already is in the RRC connected mode. To at least partially tackle this problem, there is proposed a solution for avoiding or at least reducing the impact of interference, such as UE-to-UE CLI, that may be experienced at the UE 120 during the access procedure (e.g. for attempting either small uplink packet transmission or transition to the RRC connected mode), and thereby avoiding access procedure performance degradation due to e.g. CLI.

This may be accomplished with an enhanced access procedure for the UE. In an embodiment the UE is operating according to a dynamically changing TDD communication network. In such a dynamic TDD environment, the interference is from both adjacent gNB (co-channel interference) and other UEs 122 transmitting during RX periods of the UE 120, as the UL/DL Tx/Rx cycle is dynamic and not synchronized between UEs. In an embodiment, the common four-step access procedure is used for a UE to access the network, as depicted in Figure 2. However, other access procedures are applicable as well (e.g. such as a 2-step random access procedure). As said, the radio resources used for UE reception (Rx) are prone to interference, such as CLI. Accordingly, there is proposed a solution where the UE measures interference, e.g. CLI, before initiating the access procedure and signals interference avoidance information to the network in the access procedure.

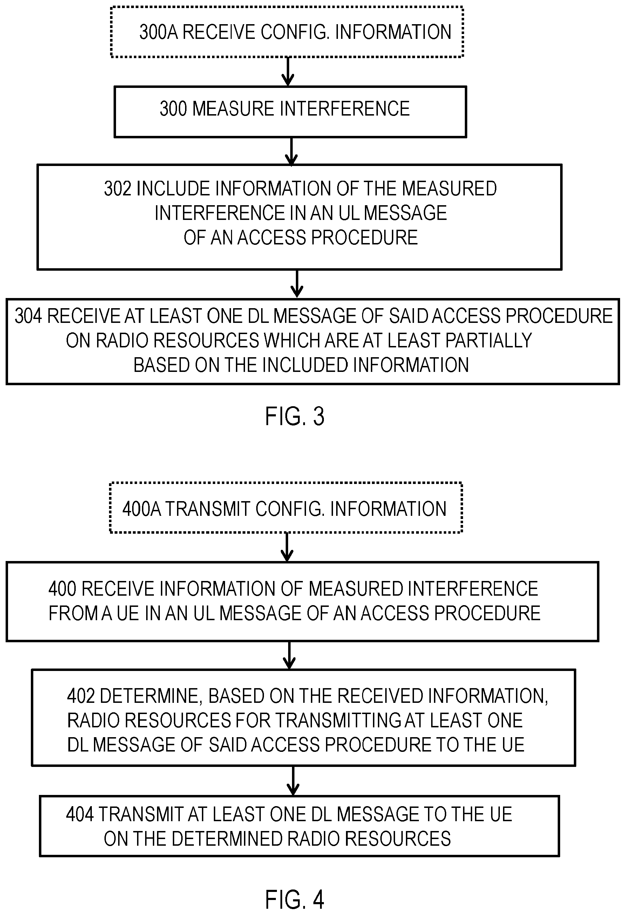

Figure 3 depicts an example method. The method may be performed by a user equipment, such as the UE 120 of Figure 1. Accordingly, as shown in Figure 3, the UE may in step 300 perform measurements of interference, such as cross-link interference (CLI). In step 302 the UE may include information of the measured interference, such as CLI, in an uplink (UL) message of an access procedure, such as an initial access/attach procedure. The information may be e.g. CLI avoidance profile, as will be described later, or some other indication of the interference, such as explicitly transmitting the measurement results or parts of it. The UE may transmit the UL message with the included information to the network. Then, in step 304 the UE may receive at least one downlink (DL) message of said access procedure on resources which are at least partially based on the included information. Although in the following CLI is often used as an example of the measured interference, any interference affecting the performance of the UE is within the scope the embodiments. In an embodiment, the access procedure is an initial access procedure.

In an embodiment, the access procedure comprises a random-access procedure. In an embodiment, the uplink message is Msg1 of the random-access procedure and the at least one downlink message comprises at least one of Msg2 and Msg4 of the random-access procedure. For example, when considering the RA procedure illustrated in Figure 2, the UE 120 may include CLI information in the Msg1 of the RA procedure, and then Msg2 - Random access response and/or Msg4 may be transmitted by the access node (e.g. the gNB 110) to the UE 120 over physical downlink shared channel (PDSCH) and/or physical downlink control channel (PDCCH) resources, the resources being based on the CLI information provided in the Msg1. In an embodiment, there are no changes to the transmission of the Msg3 of the RA procedure, compared to a conventional RA procedure.

Figure 4 depicts an example method from the point of view of the net-work node, such as the node 110 of Figure 1. Accordingly, in step 400 the network node may receive information of measured interference, such as CLI, from a UE, such as the UE 120, in an UL message of an access procedure, such as in Msg1 of the RA procedure depicted in Figure 2. In step 402, the node may determine based on the received information, radio resources for transmitting at least one DL message of said access procedure to the UE. That is, in an embodiment, the random access Msg1 may include information of the UE conducted CLI measurements in a format that is useful for the gNB 110 when scheduling random-access messages 2 and 4 to the UE 120. Then the node 110 may in step 404 wirelessly transmit the at least one DL message, such as the Msg2 and MSg4 of the RA process, to the UE 120 on the determined radio resources. There may be a predefined mapping between the UE defined interference information and network determined radio resources. This may guarantee that the UE, after sending the interference information to the network e.g. in Msg1, knows on which resources the UE 120 can expect to receive the DL messages, such as Msg2 and Msg4 of the RA procedure.

In an embodiment, the radio resources may be determined/selected by the network node such that interference is below a predetermined interference threshold at the UE. In another embodiment, the UE 120 may itself propose suitable resources to be used. The interference threshold may be based on mathematical simulations or empirical testing, for example. The network node, such as the gNB 110, and/or the UE 120 may estimate the experienced interference at the UE 120 for different resource options based on the received interference information, and then select the resources that exhibit the least amount of interference at the UE 120.

In an embodiment, the radio resources may refer to time, frequency, and/or spatial resources, such as PRBs, frames, subframes, time slots, subbands, frequency regions, subcarriers, beams, etc. In an embodiment, the gNB 110 may schedule the DL messages to take place as soon as possible on good enough frequency domain resources. However, if that is not feasible (e.g. due to these resources being expected to suffer from high CLI interference at the UE 120), the gNB 110 may schedule the message(s) in one of the following slots/subframes that do not suffer from such high CLI interference and are within the time-window where the gNB shall respond (to the received UL message) with the DL message(s). The selection of frequency and/or spatial domain resources may be selected also such that, based on the interference information, the envisaged interference at the UE 120 at those resources is less than the predetermined interference threshold.

In an embodiment, the UE performs the measurements of interference in step 300 in a non-connected mode. Such RRC non-connected mode may be an RRC idle mode or an RRC inactive mode, for example.

In an embodiment, the UE performs the measurements of interference in step 300 before initiating the access procedure, such as the RA procedure.

In an embodiment, the network node (e.g. gNB 110) may transmit configuration information to the UE 120, as shown in step 400A of Figure 4. The UE 120 may receive the configuration information, as shown in step 300A of Figure 3. The configuration information may indicate that the UE 120 should include information of measured interference (such as CLI) when accessing the network. E.g. the network informs the UE 120 whether to indicate CLI information to the network in the UL message, and/or the network informs the UE if CLI avoidance is active in/by the net-work. The configuration information may be conveyed e.g. on a broadcast channel (BCH). Such network (e.g. gNB 110) to UE broadcast signaling to inform UEs to include information of CLI measurements when they perform an access procedure with the network may provide an efficient means to indicate in the cell that the cell supports CLI avoidance techniques (that benefit from the UEs transmitting the CLI information to the network). The configuration on the BCH may be included e.g. in master or secondary information block (MIB/SIB). In this manner all the UEs in the cell may receive the broadcasted configuration information. Alternatively, or in addition to, the configuration may have been transmitted to the UE 120 over a dedicated channel, if the UE 120 has been already earlier connected to the network and then gone to idle mode. This option may be beneficial if the network triggers the interference avoidance technique only with a certain UE or only with some certain UEs. The configuration information may be, in an embodiment, in the form of Boolean info.

Next, let us consider in more details about the interference, such as CLI, measurements/determination performed by the UE 120. In an embodiment, the UE measures, in non-connected mode (e.g. in RRC idle mode or in RRC inactive mode), the aggregated (total) interference, which may include e.g. UE-to-UE CLI, co-channel interference, intra-cell interference, and inter-cell interference. There are various means for the UE to measure interference and those are readily available for implementing the total interference measurement at the UE. The interference measurement may include a scan of e.g. time, frequency and/or spatial domain. For example, total aggregated interference may be measured by the UE 120 based on observed energy in a given bandwidth, time period and spatial direction.

In an embodiment, the CLI is estimated from the measured total aggregated interference. This may take place e.g. by the UE 120 identifying the interference source to be a UE or identifying the interference type to be a crosslink interference based on the interference characteristics. For example, if during the observation, the UE 120 also identifies the presence of sounding reference signals (SRSs), which are UL only signals, then the UE 120 may detect that there is CLI interference and the amount of it

In an embodiment, the measuring of the interference comprises measuring the interference in a time domain. This may indicate e.g. what is the duty cycle of the interferer(s), i.e. by the interference sources, such as other UEs 122, in the vicinity of the UE 120.

In an embodiment, the measuring of the interference comprises measuring the interference in a frequency domain. This may indicate e.g. what frequency allocation is used by the interferer(s).

In an embodiment, the measuring of the interference comprises measuring the interference in a spatial domain. For beamforming purposes, a spatial sweep can be added. For sub-6GHz this may be accomplished in digital domain, while for above-6GHz this may be done in both digital and analogue domain. The spatial domain interference determination may require additional measurements for each spatial direction at the UE 120 (each beam).

In an embodiment, the measuring of the interference comprises measuring total received power on predetermined resource elements and averaging the measured total received power across the predetermined resource elements. E.g. the measurements may be based on a received signal strength indicator (RSSI). The RSSI may be defined as a linear average of the total received power (e.g. in [W]) observed only in certain OFDM symbols of measurement time domain resource(s), in the measurement bandwidth, over the configured resource elements. In contrast to interference measurements while in RRC Connected mode, it may be noted that in RRC Idle and Inactive modes no reference symbols, such as a sounding reference signal (SRS) or demodulation reference signal (DMRS), are known, thus RSSI may be the only available information.

As said, in an embodiment the interference, such as CLI, measurements may be averaged over the measured resources. In an embodiment, only certain physical resource block(s), PRB(s), in each time domain period, such as in each frame or subframe, are measured. As an example, only PRBs 1 and 2 are measured jointly at sub-frame 0 of each consecutive frame for an observation period of a predetermined length, wherein the period may be determined by simulations. The observation period selected for the interference measurements (e.g. in number of frames) reflects the variability of the interference conditions (fast changing conditions may require shorter observation intervals, while slower changing conditions may have longer observation intervals). Then, the measured interference may be averaged e.g. across time and/or frequency. The higher is the resolution of the measurements (from single PRB to multiple PRBs and from single sub-frame to multiple sub-frames), the better may be the derivation of the interference, such as CLI.

As a result, the UE 120 determines the interference, such as CLI, present at the UE 120. The, as indicated in step 302 of Figure 3 and in step 400 of Figure 4, the UE may transmit the information of the interference to the network. The information of the measured interference comprises at least one of a group comprising: interference characteristics in a time domain, interference characteristics in a frequency domain, interference characteristics in a spatial domain.

A compact format of the interference information that the UE 120 included in the UL message of the access procedure, such as in Msg 1, may play an important role, as the information represents what is needed by the gNB 110 to conduct efficient downlink scheduling of Msg 2 and Msg 4, while at the same time the information should cause minimal uplink signaling overhead. Therefore, in an embodiment, the result of the interference measurements is used to select an interference avoidance profile (also known as interference profile), that may be transmitted to the network. In other words, the UE 120 may determine an interference profile, such as a CLI (avoidance) profile, based on the measurements of the interference (e.g. CLI). In an embodiment, the determination of the interference profile may include quantizing the interference measurements and tabulating the results into the interference profile. This may have the benefits of restricting or minimizing the size of the payload required to inform the gNB 110 of the interference profile.

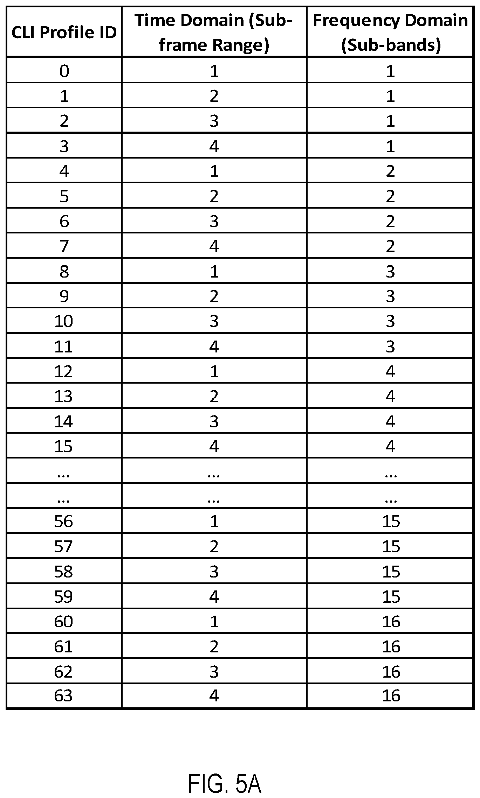

An example of the interference profile is given in Figure 5A, where the time and frequency domain columns indicate the best (range of) resources (from the UEs 120 point of view) of where the Msg2 and Msg4 should be conveyed to the UE 120, i.e. indicates time and frequency domain resource(s) which the PDCCH+PDSCH should use. As such, the interference profile may map at least to resources on which at least one DL message of said access procedure is to be transmitted by the network node 110 and received by the UE 120. The number of rows in the table of Figure 5A may be adjusted depending on the desired granularity of the resources. The granularity of the time domain may be e.g. subframe or PRB, or a set of subframes or PRBs. The granularity of the frequency domain may be e.g. sub-band or PRB, or a set of subbands or PRBs. That is, the number of elements (e.g. profiles) in the table of Figure 5A reflects the resolution of the range of resources and may be selected e.g. according to network needs.

In an embodiment, the time domain and/or frequency domain column in Figure 5A may indicate exact resources where the Msg2 and Msg4 should be transmitted to the UE 120. That is, they may indicate an exact subframe + sub-band combination, for example.

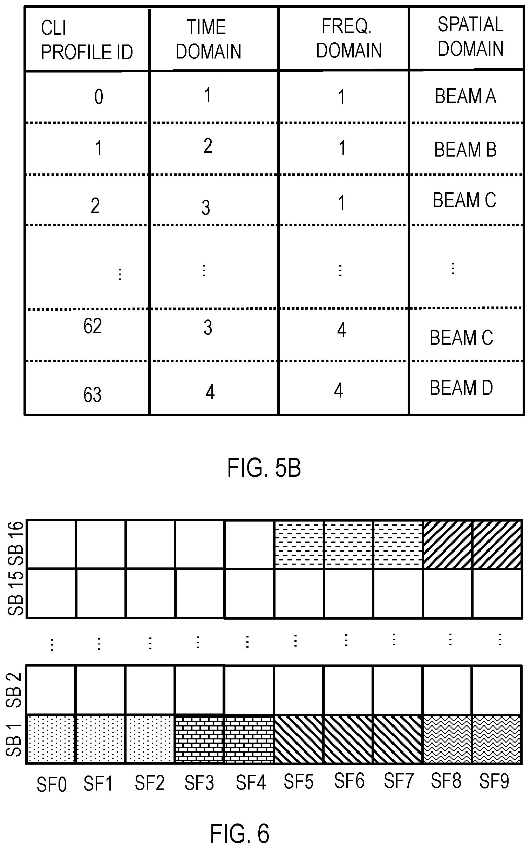

Alternatively, in an embodiment, the time domain and/or frequency domain column in Figure 5A may indicate a range of resources. This is shown in Figure 6. An interference profile #0 of Figure 5A may map to the dotted blocks of Figure 6. That is, the time domain range of resources comprises subframes 0, 1 and 2 of Figure 6, while the frequency domain resource comprises only sub-band 1. Similarly, an interference profile #1 of Figure 5A may map to the bricked blocks of Figure 6, an interference profile #2 of Figure 5A may map to the blocks with left leaning diagonal lines in Figure 6, an interference profile #3 of Figure 5A may map to the blocks with waves in Figure 6, an interference profile #63 of Figure 5A may map to the dashed blocks in Figure 6, and an interference profile #64 of Figure 5A may map to the blocks with right leaning diagonal lines in Figure 6. Although not shown, there may be similar mapping between the interference profile IDs of Figure 5A to the rest of the resources in Figure 6. The mapping illustrated in Figure 6 is merely an example mapping.

In an embodiment, as shown in Figure 5B, the interference profile mapping table may be also extended to include the range of downlink beamformers to be used. That is, the interference profile may further map to a downlink beam on which the at least one downlink message of said access procedure is to be transmitted by the network node 110 and received by the UE 120. The table of Figure 5B is enhanced with a fourth column indicating which DL beam the UE 120 desires to use for the DL message reception. Again, the number of rows may be adjusted based on the granularity of the spatial domain. The granularity of the spatial domain may be a single beam or a set/range of beams, for example.

Let us consider a case where the UE 120 measures different interference from different spatial directions. In an embodiment, the UE may use this information to select which interference avoidance profile to use. The UE 120 may be aware of the main Angles of Arrival (AoA), and the associated DL beams from the gNB 110. The UE may detect that interference from certain direction or directions may not cause interference to this AoA of the DL beam. Then, the UE may not need to select the interference profile based on this/these interference directions but may select the interference profile based on the interference that is relevant for the DL beam from the gNB 110.

In an embodiment, the UE 120 may include an indication of the determined interference profile in the UL message of the access procedure. This may serve as the information of the measured interference. In an embodiment, the interference profile is an avoidance profile of certain type of interference, such as CLI. This may be possible if the UE 120 has separated CLI interference from the measured total aggregated interference. For example, the UE may include an indication of one of the interference profile IDs of Figure 5A or 5B in the UL message. This may be beneficial in keeping the overhead of the UL message at minimum. As a response to receiving such information, the receiving gNB 110 may determine, based on the indication, the resources for transmitting at least one downlink message (such as Msg2 and Msg4). In one embodiment, the receiving gNB 110 may further determine, based on the indication, a downlink beam for transmitting the at least one downlink message, as implied in Figure 5B.

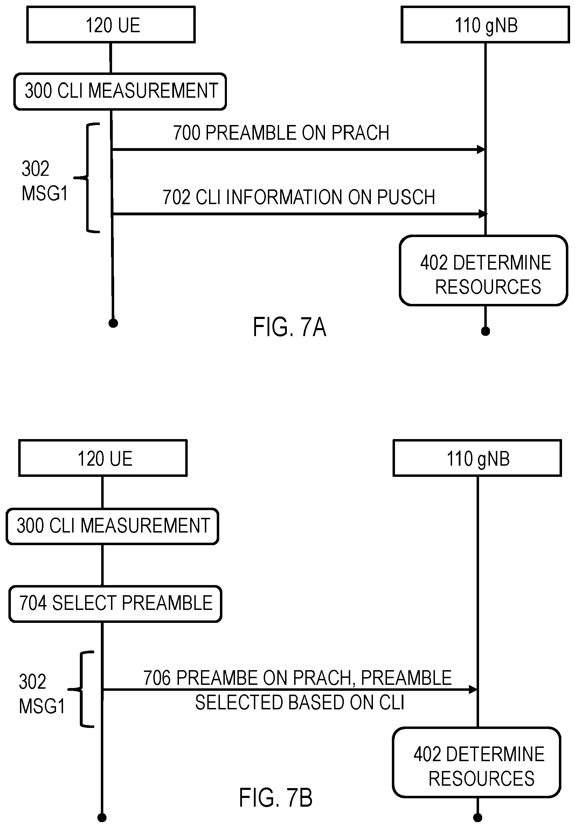

One embodiment, as shown in figure 7A, represents an explicit transmission of the interference avoidance profile (or some other interference information). In this embodiment, the UE 120 may transmit a preamble for the access procedure on an access channel (reference numeral 700) to the gNB 110, while the indication of the determined interference profile is transmitted by the UE 120 to the gNB 110 on an uplink data channel (e.g. PUSCH as shown with reference numeral 702). That is, the UE may include the CLI avoidance information (e.g. the indication of the CLI profile or some other interference avoidance profile or interference information) in conjunction with the Msg1. In other words, a PUSCH payload is transmitted in parallel with the PRACH preamble. The PUSCH payload may include the interference avoidance profile (or other indication of interference). Explicit transmission of interference information may reduce preamble collisions.

In an embodiment, there is a mapping between the preamble on the access channel and the radio resource used for conveying the indication of the interference on the data channel. In this manner, the receiving gNB 110 may, after receiving the preamble, determine that the interference avoidance information may be conveyed on the PUSCH, and on which resource(s) of the PUSCH the interference avoidance information is present.

In an embodiment, the interference avoidance profile is encoded into a certain number of bits. For example, the table in Figure 5A requires 6 uncoded bits. A larger number of interference avoidance profiles may provide better granularity at the potential cost of additional time and frequency resources needed for the interference information transmission on PUSCH.

In an embodiment, the network node may determine that no information of the measured interference is received on the uplink message of the access procedure. E.g. the network node 110 may face a failure in detection of the interference avoidance profile payload. As a response, the network node 110 may in one embodiment refrain from transmitting a downlink message as a response to the uplink message, in order to (silently) indicate to the UE 120 to include the information of the measured interference in the uplink message. In other words, the node 110 may stop the access procedure and wait for the UE to re-attempt transmission. Alternatively, in one embodiment, the node 110 may assume a default interference at the UE 120 and transmit at least one downlink message to the UE 120 on radio resources based on the assumption. For example, the node 110 may proceed with the access procedure, while assuming a default interference avoidance profile, e.g. profile ID 0. The default interference information may be predetermined, such as the CLI profile ID 0, or any other interference profile ID.

One embodiment, as shown in figure 7B, represents an implicit transmission of the interference avoidance profile (or some other interference information). In this embodiment, the UE 120 may select in step 704 a preamble for the access procedure based on the determined/measured interference (such as based on the determined CLI profile). As an example, if the interference avoidance profile is 10, then the UE transmits a PRACH preamble number 10. The mapping between the preambles and the interference information (such as the CLI profile IDs) may be predefined and know to both parties of the communication. The UE 120 may transmit the preamble on the uplink message of the access procedure in step 706. The network node 110 receiving the preamble may determine, based on the UE selected preamble, the resources for transmitting the at least one downlink message.

It is noted that this option of Figure 7B may not lead to additional PRACH preamble collisions, due to the observed interference conditions at each UE being uncorrelated (at least for sufficiently distant UEs). This approach of Figure 7B may restrict the amount of interference avoidance profiles to the number of available PRACH preambles, so as to have one-to-one correspondence.

In an embodiment, in case of failure of detection of the interference avoidance profile (i.e. the PRACH preamble), the network node 110 may refrain from transmitting a downlink message (e.g. Msg2), to trigger the UE 120 to re-attempt a preamble transmission.

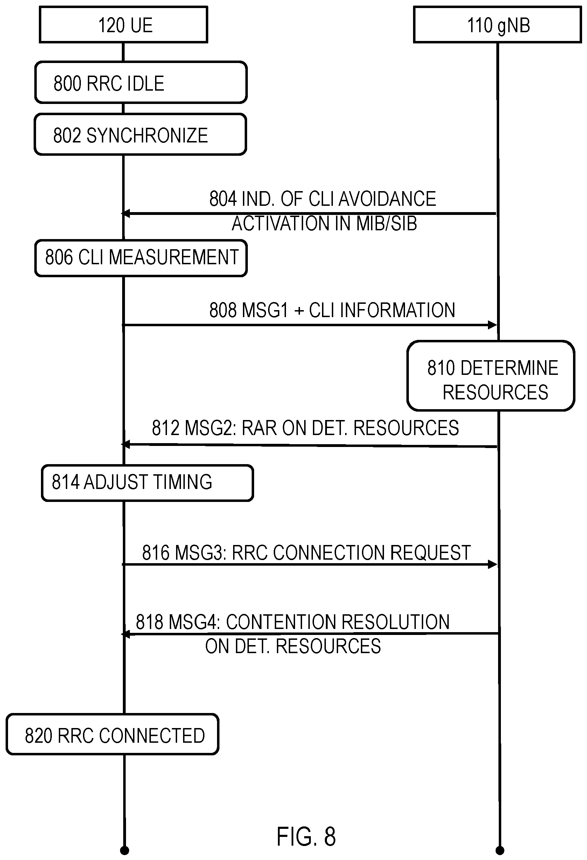

Figure 8 shows a signaling flow diagram between the UE 120 and the gNB 110. The CLI is used as an example of the interference in this Figure. In step 800, the UE in in RRC idle mode. In step 802, the UE synchronizes with the network in any conventional manner known to skilled person. In step 804, the UE receives an indication that CLI avoidance technique is activated in the cell. the information may be received in MIB/SIB, as has been explained above. In step 806 the UE performs in the idle mode and before initiating the access procedure, CLI measurements. In step 808 the UE includes information of the CLI (such as the CLI profile ID) in the uplink message (such as in Msg1 of the RA procedure). This may take place in either of the options presented in figured 7A and 7B, for example. In Figure 810, the network node 110 determines resources based on the received CLI information, the resources being for transmission of the at least one DL message (such as Msg2 and Msg4 of the RA procedure). Then, in step 812, the node 110 may transmit the Msg2 on the determined resources. Based on this Msg2, the UE may adjust timing towards the gNB 110. In step 816, the UE transmits Msg3 of the RA procedure. The transmission or content of the Msg may not differ from the conventional RA procedure. In step 818, the node 110 may transmit Msg4 on the determined resources. The resources for the transmission of the Msg2 and Msg4 may be the same or different, depending e.g. on the sizes of the messages, but both resources are based on the received CLI information. In step 820, the UE may be in RRC connected mode.

Some advantages obtained with the embodiment may include e.g. avoiding performance reduction in the idle mode during random access procedures in a dynamic TDD environment, instead of relying on procedures taking place in RRC connected mode. Another advantage may include a case where the UE attempts small uplink data transmission starting from RRC INACTIVE mode, and by taking advantage of the interference avoidance profile to be able to receive a downlink acknowledgement or an uplink grant reliably.

If scheduling decisions are completely uncorrelated from transmission time interval (TTI) to TTI, and also UL/DL switching in TDD configurations are varied on fast slot-basis without any time-correlation, then reporting of the UE's interference measurement information may in worst case be outdated when available at the gNB for new decision making. However, in reality this is not the case, which is confirmed by different studies concluding to recommend averaging UE's interference measurements. In practice, there may be time-domain correlation in resource allocation decisions, and also the gNBs may repeatedly use the same radio frame TDD configurations (e.g. 10 ms periodicity) for a longer time-period (possibly coordinated between gNBs), and hence averaging UE's interference measurements may be useful.

Although the description is written such that the 4-step RA procedure is the access-procedure, any other access procedure (such as the 2-step RA procedure) is applicable where the UE sends an uplink message with the CLI information and the following DL messages (one or more) are sent on resources based on the CLI information. In the 2-step RA procedure, there may be a payload transmitted in parallel with the PRACH preamble. This payload may include bits that allow for the distinction between RRC Connection Establishment and RRC Connection Reestablishment. Yet, some bits of this payload could be reserved for the exchange of interference information, such as the interference avoidance profile. Alternatively, in the 2-step procedure, the preamble may be selected according to the measured interference information.

Although the description is written such that the UE measures CLI, the embodiments are applicable to any interference determination, so that the UE 120 transmits an indication of the measured interference (CLI or some other interference) to the network in the access procedure. Further, the transmitted indication of the CLI may be the CLI profile ID or any other suitable indication of the interference, so that the network is made aware of the interference situation at the UE.

As indicated earlier, the embodiments may also be applicable to transitions from RRC inactive to RRC connected, as these transitions may also go over a random-access procedure. One motivation to use the embodiments also in the reestablishment procedure is that the interference, such as CLI, conditions might have changed since the last time the UE was in RRC connected mode.

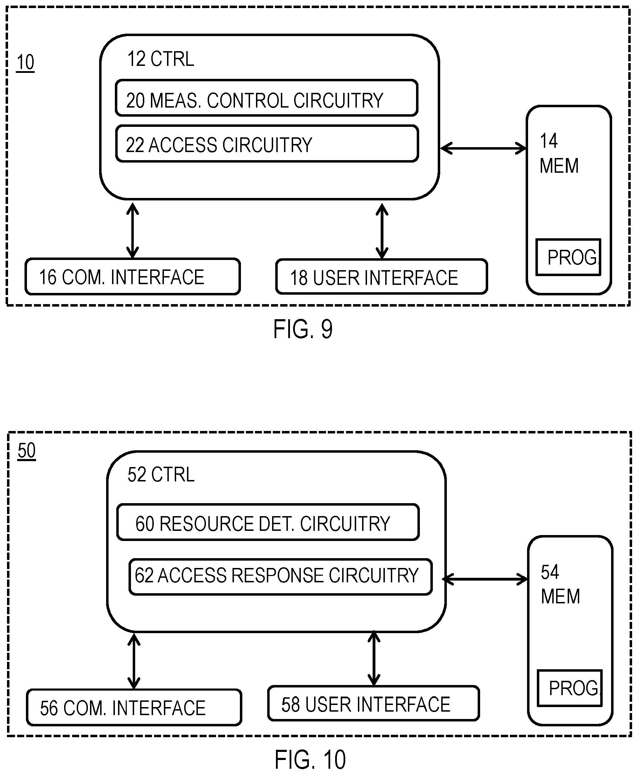

An embodiment, as shown in Figure 9, provides an apparatus 10 comprising a control circuitry (CTRL) 12, such as at least one processor, and at least one memory 14 including a computer program code (PROG), wherein the at least one memory and the computer program code (PROG), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory.

In an embodiment, the apparatus 10 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

In an embodiment, the apparatus 10 is or is comprised in the UE 120. The apparatus may be caused to execute the functionalities of some of the above described processes, such as the steps of Figure 3.

The apparatus may further comprise communication interface (TRX) 16 comprising hardware and/or software for realizing communication connectivity according to one or more communication protocols. The TRX may provide the apparatus with communication capabilities to access the radio access network, for example. The apparatus may also comprise a user interface 18 comprising, for example, at least one keypad, a microphone, a touch display, a display, a speaker, etc. The user interface may be used to control the apparatus by the user.

The control circuitry 12 may comprise a measurement control circuitry 20 for controlling the measurement of interference during the RRC idle or inactive mode, according to any of the embodiments. The control circuitry 12 may further comprise an access circuitry 62 for performing the access procedure, including the transmission of the indication of the interference information and reception of DL messages on certain resources based on the transmitted interference information, according to any of the embodiments.

An embodiment, as shown in Figure 10, provides an apparatus 50 comprising a control circuitry (CTRL) 52, such as at least one processor, and at least one memory 54 including a computer program code (PROG), wherein the at least one memory and the computer program code (PROG), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory.

In an embodiment, the apparatus 50 may be or be comprised in a network node, such as in gNB/gNB-CU/gNB-DU of 5G. In an embodiment, the apparatus 50 is or is comprised in the network node 110. The apparatus may be caused to execute the functionalities of some of the above described processes, such as the steps of Figure 4.

It should be appreciated that future networks may utilize network functions virtualization (NFV) which is a network architecture concept that pro-poses virtualizing network node functions into "building blocks" or entities that may be operationally connected or linked together to provide services. A virtualized net-work function (VNF) may comprise one or more virtual machines running computer program codes using standard or general type servers instead of customized hardware. Cloud computing or data storage may also be utilized. In radio communications, this may mean node operations to be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core net-work operations and base station operations may vary depending on implementation.

In an embodiment, the server may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Therefore, in an embodiment, a CU-DU architecture is implemented. In such case the apparatus 50 may be comprised in a central unit (e.g. a control unit, an edge cloud server, a server) operatively coupled (e.g. via a wireless or wired net-work) to a distributed unit (e.g. a remote radio head/node). That is, the central unit (e.g. an edge cloud server) and the radio node may be stand-alone apparatuses communicating with each other via a radio path or via a wired connection. Alternatively, they may be in a same entity communicating via a wired connection, etc. The edge cloud or edge cloud server may serve a plurality of radio nodes or a radio access networks. In an embodiment, at least some of the described processes may be performed by the central unit. In another embodiment, the apparatus 50 may be instead comprised in the distributed unit, and at least some of the described processes may be performed by the distributed unit.

In an embodiment, the execution of at least some of the functionalities of the apparatus 50 may be shared between two physically separate devices (DU and CU) forming one operational entity. Therefore, the apparatus may be seen to depict the operational entity comprising one or more physically separate de-vices for executing at least some of the described processes. In an embodiment, such CU-DU architecture may provide flexible distribution of operations between the CU and the DU. In practice, any digital signal processing task may be performed in either the CU or the DU and the boundary where the responsibility is shifted between the CU and the DU may be selected according to implementation. In an embodiment, the apparatus 50 controls the execution of the processes, regardless of the location of the apparatus and regardless of where the processes/functions are carried out.

The apparatus may further comprise communication interface (TRX) 56 comprising hardware and/or software for realizing communication connectivity according to one or more communication protocols. The TRX may provide the apparatus with communication capabilities to access the radio access net-work, for example. The apparatus may also comprise a user interface 58 comprising, for example, at least one keypad, a microphone, a touch display, a display, a speaker, etc. The user interface may be used to control the apparatus by the user.

The control circuitry 52 may comprise a resource determination circuitry 60 for determining which resources are to be used in communication with the UE, according to any of the embodiments. The control circuitry 12 may comprise an access response circuity 62 e.g. for responding to the UE 120 when the UE attempts connection with the network. this may include responding to the UE on the resources which are determined based on interference information, according to any of the embodiments.

In an embodiment, an apparatus carrying out at least some of the embodiments described comprises at least one processor and at least one memory including a computer program code, wherein the at least one memory and the computer program code are configured, with the at least one processor, to cause the apparatus to carry out the functionalities according to any one of the embodiments described. According to an aspect, when the at least one processor executes the computer program code, the computer program code causes the apparatus to carry out the functionalities according to any one of the embodiments described. According to another embodiment, the apparatus carrying out at least some of the embodiments comprises the at least one processor and at least one memory including a computer program code, wherein the at least one processor and the computer program code perform at least some of the functionalities according to any one of the embodiments described. Accordingly, the at least one processor, the memory, and the computer program code form processing means for carrying out at least some of the embodiments described. According to yet another embodiment, the apparatus carrying out at least some of the embodiments comprises a circuitry including at least one processor and at least one memory including computer program code. When activated, the circuitry causes the apparatus to perform the at least some of the functionalities according to any one of the embodiments described.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular net-work device, or another network device.

In an embodiment, at least some of the processes described may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus for a user equipment, the apparatus comprising means for performing:
measuring interference in a radio resource control non-connected mode;
estimating interference on different radio resources based on the measurements of the interference;
selecting an interference profile among a plurality of interference profiles based on the estimated interference, wherein different interference profiles map to different radio resources on which at least one downlink message of an access procedure is to be received;
including, as information of the measured interference, an indication of the selected interference profile in an uplink message of the access procedure, wherein the selected interference profile maps to radio resources on which interference is estimated to be below a predetermined interference threshold for the reception of the at least one downlink message; and
causing reception of the at least one downlink message of said access procedure on radio resources which are at least partially based on the included indication.

2. The apparatus of claim 1, wherein the apparatus further comprises means for performing:
causing reception of configuration information from a network, the configuration information indicating the user equipment to include information of measured interference when accessing the network.

3. The apparatus of any preceding claim, wherein the interference profile further maps to a downlink beam on which the at least one downlink message of said access procedure is to be received.

4. The apparatus of any preceding claim, wherein a preamble for the access procedure is transmitted on an access channel and the information of the measured interference is transmitted on an uplink data channel.

5. The apparatus of claim 4, wherein there is a mapping between the preamble on the access channel and at least one radio resource used for conveying the information of the measured interference on the uplink data channel.

6. An apparatus for a network node, the apparatus comprising means for performing:
causing reception of information of measured interference from a user equipment in an uplink message of an access procedure,
wherein the information of the measured interference comprises an indication of an interference profile among a plurality of interference profiles, wherein different interference profiles map to different radio resources on which at least one downlink message of an access procedure is to be transmitted, and the indicated interference profile maps to radio resources on which interference at the user equipment is estimated to be below a predetermined interference threshold for reception of the at least one downlink message,
wherein the means are further configured to perform:
determining, based on the indication, radio resources for transmitting the at least one downlink message of said access procedure to the user equipment; and
causing transmission of the at least one downlink message to the user equipment on the determined radio resources.

7. The apparatus of claim 6, wherein the apparatus further comprises means for performing:
causing transmission of configuration information to the user equipment, the configuration information indicating the user equipment to include information of measured interference when accessing the network.

8. The apparatus of any of claims 6 to 7, wherein the apparatus further comprises means for performing:
determining, based on the indication, a downlink beam for transmitting at least one downlink message.

9. The apparatus of any of claims 6 to 8, wherein the apparatus further comprises means for performing:
receiving a preamble for the access procedure, wherein the preamble is based on the measured interference; and
determining, based on the preamble, the radio resources for transmitting the at least one downlink message.

10. The apparatus of any of claims 6 to 9, wherein the apparatus further comprises means for performing:
determining that no information of the measured interference is received on the uplink message of the access procedure; and
performing one of the following:
• refraining from transmitting a downlink message as a response to the uplink message, in order to indirectly indicate to the user equipment to include the information of the measured interference in the uplink message, or
• assuming a default interference at the user equipment and transmitting the at least one downlink message to the user equipment on resources based on the assumption.

11. A method at a user equipment, comprising:
measuring interference in a radio resource control non-connected mode;
estimating interference on different radio resources based on the measurements of the interference;
selecting an interference profile among a plurality of interference profiles based on the estimated interference, wherein different interference profiles map to different radio resources on which at least one downlink message of an access procedure is to be received;
including, as information of the measured interference, an indication of the selected interference profile in an uplink message of the access procedure, wherein the selected interference profile maps to radio resources on which interference is estimated to be below a predetermined interference threshold for the reception of the at least one downlink message; and
causing reception of the at least one downlink message of said access procedure on radio resources which are at least partially based on the included indication.

12. A method at a network node, comprising:
causing reception of information of measured interference from a user equipment in an uplink message of an access procedure,
wherein the information of the measured interference comprises an indication of an interference profile among a plurality of interference profiles, wherein different interference profiles map to different radio resources on which at least one downlink message of an access procedure is to be transmitted, and the indicated interference profile maps to radio resources on which interference at the user equipment is estimated to be below a predetermined interference threshold for reception of the at least one downlink message,
wherein the method further comprises:
determining, based on the indication, radio resources for transmitting the at least one downlink message of said access procedure to the user equipment; and
causing transmission of the at least one downlink message to the user equipment on the determined radio resources.

13. A computer program product comprising program instructions which, when executed by a computer, cause the computer to perform the method according to claim 11 or the method according to claim 12.

## Patentansprüche

1. Vorrichtung für eine Teilnehmereinrichtung, wobei die Vorrichtung Mittel zum Durchführen von Folgendem umfasst:
Messen einer Interferenz in einem nicht verbundenen Modus einer Funkressourcensteuerung;
Schätzen einer Interferenz auf verschiedenen Funkressourcen auf Basis der Messungen der Interferenz;
Auswählen eines Interferenzprofils aus einer Vielzahl von Interferenzprofilen auf Basis der geschätzten Interferenz, wobei verschiedene Interferenzprofile verschiedenen Funkressourcen zugeordnet sind, auf denen mindestens eine Downlinknachricht einer Zugriffsprozedur zu empfangen ist;
Einbinden einer Anzeige des ausgewählten Interferenzprofils in eine Uplinknachricht der Zugriffsprozedur als Informationen der gemessenen Interferenz, wobei das ausgewählte Interferenzprofil Funkressourcen zugeordnet sind, für die geschätzt wird, dass eine Interferenz für den Empfang der mindestens einen Downlinknachricht unter einem vorbestimmten Interferenzschwellwert liegt; und
Bewirken des Empfangs der mindestens einen Downlinknachricht der Zugriffsprozedur auf Funkressourcen, die mindestens teilweise auf der eingebundenen Anzeige basieren.

2. Vorrichtung nach Anspruch 1, wobei die Vorrichtung ferner Mittel zum Durchführen von Folgendem umfasst:
Bewirken des Empfangs von Auslegungsinformationen von einem Netzwerk, wobei die Auslegungsinformationen anzeigen, dass in die Teilnehmereinrichtung Informationen einer gemessenen Interferenz eingebunden sein sollen, wenn sie auf das Netzwerk zugreift.

3. Vorrichtung nach einem der vorhergehenden Ansprüche, wobei das Interferenzprofil ferner einem Downlinkstrahl zugeordnet ist, auf dem die mindestens eine Downlinknachricht der Zugriffsprozedur zu empfangen ist.

4. Vorrichtung nach einem der vorhergehenden Ansprüche, wobei eine Präambel für die Zugriffsprozedur auf einem Zugriffskanal übertragen wird und die Informationen der gemessenen Interferenz auf einem Uplinkdatenkanal übertragen werden.

5. Vorrichtung nach Anspruch 4, wobei zwischen der Präambel auf dem Zugriffskanal und mindestens einer Funkressource, die zum Übermitteln der Informationen der gemessenen Interferenz auf dem Uplinkdatenkanal verwendet wird, eine Zuordnung besteht.

6. Vorrichtung für einen Netzwerkknoten, wobei die Vorrichtung Mittel zum Durchführen von Folgendem umfasst:
Bewirken des Empfangs von Informationen einer gemessenen Interferenz von einer Teilnehmereinrichtung in einer Uplinknachricht einer Zugriffsprozedur,
wobei die Informationen der gemessenen Interferenz eine Anzeige eines Interferenzprofils einer Vielzahl von Interferenzprofilen umfassen, wobei verschiedene Interferenzprofile verschiedenen Funkressourcen zugeordnet sind, auf denen mindestens eine Downlinknachricht einer Zugriffsprozedur zu übertragen ist, und das angezeigte Interferenzprofil Funkressourcen zugeordnet ist, für die geschätzt wird, dass eine Interferenz zum Empfang der mindestens einen Downlinknachricht an der Teilnehmereinrichtung unter einem vorbestimmten Interferenzschwellwert liegt,
wobei die Mittel ferner dazu ausgelegt sind, Folgendes durchzuführen:
Bestimmen von Funkressourcen zum Übertragen der mindestens einen Downlinknachricht der Zugriffsprozedur zur Teilnehmereinrichtung auf Basis der Anzeige und
Bewirken der Übertragung der mindestens einen Downlinknachricht auf den bestimmten Funkressourcen zur Teilnehmereinrichtung.

7. Vorrichtung nach Anspruch 6, wobei die Vorrichtung ferner Mittel zum Durchführen von Folgendem umfasst:
Bewirken der Übertragung von Auslegungsinformationen zur Teilnehmereinrichtung, wobei die Auslegungsinformationen anzeigen, dass in die Teilnehmereinrichtung Informationen einer gemessenen Interferenz eingebunden sein sollen, wenn sie auf das Netzwerk zugreift.

8. Vorrichtung nach einem der Ansprüche 6 bis 7, wobei die Vorrichtung ferner Mittel zum Durchführen von Folgendem umfasst:
Bestimmen eines Downlinkstrahls zum Übertragen von mindestens einer Downlinknachricht auf Basis der Anzeige.

9. Vorrichtung nach einem der Ansprüche 6 bis 8, wobei die Vorrichtung ferner Mittel zum Durchführen von Folgendem umfasst:
Empfangen einer Präambel für die Zugriffsprozedur, wobei die Präambel auf der gemessenen Interferenz basiert; und
Bestimmen der Funkressourcen zum Übertragen der mindestens einen Downlinknachricht auf Basis der Präambel.

10. Vorrichtung nach einem der Ansprüche 6 bis 9, wobei die Vorrichtung ferner Mittel zum Durchführen von Folgendem umfasst:
Bestimmen, dass keine Informationen der gemessenen Interferenz in der Uplinknachricht der Zugriffsprozedur empfangen wurde; und
Durchführen von einem von Folgendem:
• Unterlassen des Übertragens einer Downlinknachricht als eine Reaktion auf die Uplinknachricht, um der Teilnehmereinrichtung indirekt anzuzeigen, die Informationen der gemessenen Interferenz in die Uplinknachricht einzubinden, oder
• Annehmen einer Standardinterferenz an der Teilnehmereinrichtung und Übertragen der mindestens einen Downlinknachricht auf Ressourcen zur Teilnehmereinrichtung auf Basis der Annahme.

11. Verfahren an einer Teilnehmereinrichtung, das Folgendes umfasst:
Messen einer Interferenz in einem nicht verbundenen Modus einer Funkressourcensteuerung;
Schätzen einer Interferenz auf verschiedenen Funkressourcen auf Basis der Messungen der Interferenz;
Auswählen eines Interferenzprofils aus einer Vielzahl von Interferenzprofilen auf Basis der geschätzten Interferenz, wobei verschiedene Interferenzprofile verschiedenen Funkressourcen zugeordnet sind, auf denen mindestens eine Downlinknachricht einer Zugriffsprozedur zu empfangen ist;
Einbinden einer Anzeige des ausgewählten Interferenzprofils in eine Uplinknachricht der Zugriffsprozedur als Informationen der gemessenen Interferenz, wobei das ausgewählte Interferenzprofil Funkressourcen zugeordnet sind, für die geschätzt wird, dass eine Interferenz für den Empfang der mindestens einen Downlinknachricht unter einem vorbestimmten Interferenzschwellwert liegt; und
Bewirken des Empfangs der mindestens einen Downlinknachricht der Zugriffsprozedur auf Funkressourcen, die mindestens teilweise auf der eingebundenen Anzeige basieren.

12. Verfahren an einem Netzwerkknoten, das Folgendes umfasst:
Bewirken des Empfangs von Informationen einer gemessenen Interferenz von einer Teilnehmereinrichtung in einer Uplinknachricht einer Zugriffsprozedur,
wobei die Informationen der gemessenen Interferenz eine Anzeige eines Interferenzprofils einer Vielzahl von Interferenzprofilen umfassen, wobei verschiedene Interferenzprofile verschiedenen Funkressourcen zugeordnet sind, auf denen mindestens eine Downlinknachricht einer Zugriffsprozedur zu übertragen ist, und das angezeigte Interferenzprofil Funkressourcen zugeordnet ist, für die geschätzt wird, dass eine Interferenz zum Empfang der mindestens einen Downlinknachricht an der Teilnehmereinrichtung unter einem vorbestimmten Interferenzschwellwert liegt,
wobei das Verfahren ferner Folgendes umfasst:
Bestimmen von Funkressourcen zum Übertragen der mindestens einen Downlinknachricht der Zugriffsprozedur zur Teilnehmereinrichtung auf Basis der Anzeige und
Bewirken der Übertragung der mindestens einen Downlinknachricht auf den bestimmten Funkressourcen zur Teilnehmereinrichtung.

13. Computerprogrammprodukt, das Programmanweisungen umfasst, die, wenn sie von einem Computer ausgeführt werden, bewirken, dass der Computer das Verfahren nach Anspruch 11 oder das Verfahren nach Anspruch 12 durchführt.

## Revendications

1. Appareil pour un équipement d'utilisateur, l'appareil comprenant des moyens pour effectuer :
la mesure d'une interférence dans un mode non connecté de contrôle de ressources radio ;
l'estimation d'une interférence sur différentes ressources radio sur la base des mesures de l'interférence ;
la sélection d'un profil d'interférence parmi une pluralité de profils d'interférence sur la base de l'interférence estimée, dans lequel différents profils d'interférence correspondent à différentes ressources radio sur lesquelles au moins un message de liaison descendante d'une procédure d'accès doit être reçu ;
l'inclusion, en tant qu'informations de l'interférence mesurée, d'une indication du profil d'interférence sélectionné dans un message de liaison montante de la procédure d'accès, dans lequel le profil d'interférence sélectionné correspond à des ressources radio sur lesquelles on estime que l'interférence est en dessous d'un seuil d'interférence prédéterminé pour la réception de l'au moins un message de liaison descendante ; et
la provocation de la réception de l'au moins un message de liaison descendante de ladite procédure d'accès sur des ressources radio qui sont au moins partiellement basées sur l'indication incluse.

2. Appareil selon la revendication 1, dans lequel l'appareil comprend en outre des moyens pour effectuer :
la provocation de la réception d'informations de configuration à partir d'un réseau, les informations de configuration indiquant à l'équipement d'utilisateur d'inclure des informations de l'interférence mesurée lors de l'accès au réseau.

3. Appareil selon l'une quelconque des revendications précédentes, dans lequel le profil d'interférence correspond en outre à un faisceau de liaison descendante sur lequel l'au moins un message de liaison descendante de ladite procédure d'accès doit être reçu.

4. Appareil selon l'une quelconque des revendications précédentes, dans lequel un préambule pour la procédure d'accès est transmis sur un canal d'accès, et les informations de l'interférence mesurée sont transmises sur un canal de données de liaison montante.

5. Appareil selon la revendication 4, dans lequel il existe une mise en correspondance entre le préambule sur le canal d'accès et au moins une ressource radio utilisée pour transporter les informations de l'interférence mesurée sur le canal de données de liaison montante.

6. Appareil pour un nœud de réseau, l'appareil comprenant des moyens pour effectuer :
la provocation de la réception d'informations d'interférence mesurée à partir d'un équipement d'utilisateur dans un message de liaison montante d'une procédure d'accès,
dans lequel les informations de l'interférence mesurée comprennent une indication d'un profil d'interférence parmi une pluralité de profils d'interférence, dans lequel différents profils d'interférence correspondent à différentes ressources radio sur lesquelles au moins un message de liaison descendante d'une procédure d'accès doit être transmis, et le profil d'interférence indiqué correspond à des ressources radio sur lesquelles on estime que l'interférence au niveau de l'équipement d'utilisateur est en dessous d'un seuil d'interférence prédéterminé pour la réception de l'au moins un message de liaison descendante,
dans lequel les moyens sont en outre configurés pour effectuer :
la détermination, sur la base de l'indication, de ressources radio pour transmettre l'au moins un message de liaison descendante de ladite procédure d'accès à l'équipement d'utilisateur ; et
la provocation de la transmission de l'au moins un message de liaison descendante à l'équipement d'utilisateur sur les ressources radio déterminées.

7. Appareil selon la revendication 6, dans lequel l'appareil comprend en outre des moyens pour effectuer :
la provocation de la transmission d'informations de configuration à l'équipement d'utilisateur, les informations de configuration indiquant à l'équipement d'utilisateur d'inclure des informations de l'interférence mesurée lors de l'accès au réseau.

8. Appareil selon l'une quelconque des revendications 6 et 7, dans lequel l'appareil comprend en outre des moyens pour effectuer :
la détermination, sur la base de l'indication, d'un faisceau de liaison descendante pour transmettre au moins un message de liaison descendante.

9. Appareil selon l'une quelconque des revendications 6 à 8, dans lequel l'appareil comprend en outre des moyens pour effectuer :
la réception d'un préambule pour la procédure d'accès, dans lequel le préambule est basé sur l'interférence mesurée ; et
la détermination, sur la base du préambule, des ressources radio pour transmettre l'au moins un message de liaison descendante.

10. Appareil selon l'une quelconque des revendications 6 à 9, dans lequel l'appareil comprend en outre des moyens pour :
déterminer qu'aucune information de l'interférence mesurée n'est reçue sur le message de liaison montante de la procédure d'accès ; et
effectuer l'une des opérations suivantes :
• s'abstenir de transmettre un message de liaison descendante comme réponse au message de liaison montante, afin d'indiquer indirectement à l'équipement d'utilisateur d'inclure les informations de l'interférence mesurée dans le message de liaison montante, ou
• supposer une interférence par défaut au niveau de l'équipement d'utilisateur et transmettre l'au moins un message de liaison descendante à l'équipement d'utilisateur sur des ressources basées sur la supposition.

11. Procédé au niveau d'un équipement d'utilisateur, comprenant :
la mesure d'une interférence dans un mode non connecté de contrôle de ressources radio ;
l'estimation de l'interférence sur différentes ressources radio sur la base des mesures de l'interférence ;
la sélection d'un profil d'interférence parmi une pluralité de profils d'interférence sur la base de l'interférence estimée, dans lequel différents profils d'interférence correspondent à différentes ressources radio sur lesquelles au moins un message de liaison descendante d'une procédure d'accès doit être reçu ;
l'inclusion, en tant qu'informations de l'interférence mesurée, d'une indication du profil d'interférence sélectionné dans un message de liaison montante de la procédure d'accès, dans lequel le profil d'interférence sélectionné correspond à des ressources radio sur lesquelles on estime que l'interférence est en dessous d'un seuil d'interférence prédéterminé pour la réception de l'au moins un message de liaison descendante ; et
la provocation de la réception de l'au moins un message de liaison descendante de ladite procédure d'accès sur des ressources radio qui sont au moins partiellement basées sur l'indication incluse.

12. Procédé au niveau d'un nœud de réseau, comprenant :
la provocation de la réception d'informations d'interférence mesurée à partir d'un équipement d'utilisateur dans un message de liaison montante d'une procédure d'accès,
dans lequel les informations de l'interférence mesurée comprennent une indication d'un profil d'interférence parmi une pluralité de profils d'interférence, dans lequel différents profils d'interférence correspondent à différentes ressources radio sur lesquelles au moins un message de liaison descendante d'une procédure d'accès doit être transmis, et le profil d'interférence indiqué correspond à des ressources radio sur lesquelles on estime que l'interférence au niveau de l'équipement d'utilisateur est en dessous d'un seuil d'interférence prédéterminé pour la réception de l'au moins un message de liaison descendante,
dans lequel le procédé comprend en outre :
la détermination, sur la base de l'indication, des ressources radio pour transmettre l'au moins un message de liaison descendante de ladite procédure d'accès à l'équipement d'utilisateur ; et
la provocation de la transmission de l'au moins un message de liaison descendante à l'équipement d'utilisateur sur les ressources radio déterminées.

13. Produit de programme informatique comprenant des instructions de programme exécutées par un ordinateur, amenant l'ordinateur à réaliser le procédé selon la revendication 11 ou le procédé selon la revendication 12.
